# EUROPÄISCHE PATENTSCHRIFT

(11) **EP 2 138 351 B1**
(45) Veröffentlichungstag und Bekanntmachung des Hinweises auf die Patenterteilung: **31.08.2016**
(21) Anmeldenummer: 08104520.5
(22) Anmeldetag: 24.06.2008
(51) Int. Cl.: B60Q 9/00

(54) **Warneinrichtung für ein Kraftfahrzeug**
Warning apparatus for a motor vehicle
Appareil d'avertissement pour un véhicule automobile

(43) Veröffentlichungstag der Anmeldung: 30.12.2009
(73) Patentinhaber: Ford Global Technologies, LLC, Dearborn, MI 48126 (US)
(72) Erfinder: Müller, Holger, 50735 Köln (DE); La Tendresse, Ingo, 50739 Köln (DE)
(74) Vertreter: Dörfler, Thomas

(56) Entgegenhaltungen:
- EP-A- 1 736 360
- US-A1- 2004 046 647
- US-A1- 2007 182 527

## Beschreibung

Die Erfindung betrifft eine Warneinrichtung für ein Kraftfahrzeug mit einer Blinkanlage zur Anzeige eines Spurwechsels umfassend mindestens eine im Blickfeld des Fahrers angeordnete Signalanzeige und mit einem Sensorsystem zur Erfassung von Hindernissen im Totwinkelbereich, wobei das Sensorsystem bei Erfassung eines Hindernisses ein Warnsignal erzeugt.

Das Überwachen des Totwinkelbereichs ist für Fahrer eines Kraftfahrzeugs eine wichtige und zugleich schwierige Aufgabe, um Unfälle zu vermeiden. Bei dem Totwinkelbereich handelt es sich um den Bereich seitlich der Kraftfahrzeuge, der nicht ohne weiteres mittels der Seiten- und Rückspiegel oder vom Fahrer ohne größere Körperbewegungen einsehbar ist.

Dieser Bereich ist je Anzahl der Fenster und Rückspiegel unterschiedlich groß und nicht vollständig zu vermeiden. Ein besonderes Problem stellt der tote Winkel bei LKWs, Bussen und Motorrädern dar, da diese auf Grund der Größe und Konstruktion nur einen eingeschränkten Sichtradius haben. Beim gegenwärtigen Stand der gesetzlichen Regelungen wird die Größe des toten Winkels mit 38 % angegeben.

Der Totwinkelbereich verhindert oder vermindert die Reaktionen des Fahrers auf das Geschehen. Besonders deutlich wird das an Radwegen rechts neben der Fahrbahn und abbiegenden Lkw. Fast immer geben die Fahrer bei einem Unfall an, den Radfahrer nicht gesehen zu haben wegen des toten Winkels. Auch auf Fehler anderer im toten Winkel kann nicht reagiert werden, woraus ebenfalls Unfälle resultieren. Jährlich sind (bis 2003) in Deutschland etwa 140 Radfahrer und Fußgänger bei Unfällen mit rechtsabbiegenden LKW gestorben.

Bisher sind unterschiedliche technische Einrichtungen bekannt, um eine Überwachung des Totwinkelbereichs zu erleichtern bzw. ermöglichen.

Aus der US 6,859,148 ist eine Warneinrichtung bekannt, bei der die Nähe eines zweiten Fahrzeugs mittels einer Kamera und entsprechender Intelligenz erkannt und über eine optische oder akustische Anzeige wiedergegeben wird. Hierbei handelt es sich jedoch um dedizierte Anzeigen, so dass der Fahrer sein Augenmerk in besonderer Weise hierfür schulen muss. Zudem hat die akustische Warnung den Nachteil, dass sie nicht in allen Fahrsituationen und bei allen Fahrern gleichgut geeignet ist und nicht die Richtung, in der das erfasste Fahrzeug liegt, wiedergeben kann.

Aus der US 6,812,833 ist eine weitere Warneinrichtung bekannt, bei der der Blinkerhebel der Blinkanlage nach Erfassung eines Hindernisses bzw. Fahrzeugs im überwachten Bereich vibriert. Diese Einrichtung ist jedoch verhältnismäßig komplex aufgebaut und kann den Fahrer nur warnen, wenn er seine Hand an dem Blinkerhebel genügend lange belässt.

Aus der EP 1 450 330 A1 ist eine Warneinrichtung bekannt, bei der nach Erfassung eines Hindernisses, das allerdings in einem der Fahrzeugspiegel sichtbar sein muss, ein Signal erzeugt wird, dass auf den entsprechenden Spiegel hinweist. Bevorzugt ist dabei die Anzeige des Signals in dem Spiegel selber. Mit dieser Einrichtung kann der Totwinkelbereich nur ungenügend überwacht werden, da das erkannte bzw. erfasste Hindernis im Spiegel sichtbar sein muss. Alternativ ist die Verwendung einer dedizierten Anzeige vorgesehen, die mittels Richtungspfeilen auf die Richtung Hinweist, in der das Hindernis liegt.

Eine gattungsgemäße Warneinrichtung für ein Kraftfahrzeug ist aus US 2004/0046647 A1 bekannt.

Demgegenüber besteht die Aufgabe der vorliegenden Erfindung eine Warneinrichtung für ein Kraftfahrzeug bereitzustellen, das auf einfache Weise die Überwachung des Totwinkelbereichs erlaubt und zudem einfach aufgebaut ist und für den Fahrer ohne größere Umstellung der normalen Fahrgewohnheiten verwendbar ist.

Diese Aufgabe wird durch die in Anspruch 1 wiedergegebene Warneinrichtung gelöst.

Dadurch, dass die Signalanzeige der Blinkanlage mit dem Sensorsystem derart verbunden ist, dass das Warnsignal in optischer Form über die Signalanzeige wiedergegeben wird, ist es möglich, den Fahrer auf psychologisch günstige Weise mit einfachen bereits vorhandenen Mitteln zu warnen, da die einfach zu verstehenden Blinkanzeigen in praktisch allen Fahrzeugen aufgrund ihrer Wichtigkeit im prominenten Blickfeld angeordnet sind und vom Fahrer aus der normalen Gewohnheit heraus schön mit hoher Aufmerksamkeit bedacht werden. Der Fahrer muss also kein neues System oder weitere dedizierte Warnanzeigen erlernen bzw. in seine Gewohnheiten aufnehmen.

Von Vorteil ist es, wenn die Signalanzeige der Blinkanlage getrennte Bereiche für die getrennte Anzeige eines linken und rechten Spurwechsels aufweist. Dann kann über die gezielte Ansteuerung des entsprechenden Bereichs die Richtung angedeutet werden, in der das im Totwinkelbereich erfasste Hindernis liegt. Dazu können die getrennten Bereiche der Signalanzeige der Blinkanlage mit dem Sensorsystem derart verbunden sein, dass der Bereich angesteuert wird, der der Richtung des erfassten Hindernisses entspricht.

Weiter ist es möglich, dass die Signalanzeige mit einem Leuchtmittel zur Wiedergabe des Warnsignals in einer von dem normalen Gebrauch abweichenden Farbe ausgestaltet ist. So leuchte die Anzeige der Blinkanlage üblicherweise in Grün. Die Warnsignalfarbe würde dann davon abweichend, z. B. in Rot oder Gelb etc, erscheinen. Dies kann auf einfache Weise z.B. über zweifarbige LEDs erreicht werden.

Zur Erhöhung der optischen Aufmerksamkeit im Warnfall kann es sinnvoll sein, wenn Signalanzeige in rascher Folge blinkt. Die Signalanzeige kann daher derart ansteuerbar ausgestaltet sein, dass das optische Warnsignal in Intervallen wiedergegeben wird.

Zur Unterstützung der optischen Warnung kann zusätzlich ein akustisches Signal, wie ein Warnton, eine Sprachausgabe etc. vorgesehen sein. Die Signalanzeige kann also mit einem Mittel zur akustischen Unterstützung der optischen Wiedergabe ausgestaltet sein.

Das optische Warnsignal kann allerdings nicht nur durch einen Farbunterschied erzeugt werden, sondern es ist auch möglich, zusätzlich oder alternativ die Helligkeit der Anzeige zu variieren. Daher kann die Signalanzeige mit einem Leuchtmittel zur Wiedergabe des Warnsignals in einer von dem normalen Gebrauch abweichenden Helligkeit ausgestaltet sein. Dies ist insbesondere bei Dunkelheit von Vorteil und kann entsprechend automatisch z. B. bei Nacht oder im Tunnel aktiviert werden.

Vorteilhaft ist die Signalanzeige derart ansteuerbar ausgestaltet ist, dass das optische Warnsignal in verschiedener Intervallfolge und/oder in verschiedener Lichtintensität wiedergegeben wird, abhängig von der Position und/oder Entfernung des Hindernisses.

In einer vorteilhaften Ausführung umfaßt die Warneinrichtung eine Tonerzeugseinrichtung, die zusätzlich zum optischen Warnsignal einen Signalton erzeugt. Damit ist Signalanzeige mit einem Mittel zur akustischen Unterstützung der optischen Wiedergabe ausgestaltet. Der Signalton kann ein üblicher Warnton sein, wie er Im Fahrzeug für viele Funktionen Anwendungen findet, z. B. Blinkergeräusch, Sicherheitsgurterkennung, Türverriegelung etc., er kann auch mittels einer Sprachausgabe als sprachliche Warnmeldung oder als Warnton vorgesehen sein.

Vorteilhaft werden das optisches Warnsignal und der Signalton im gleichen Intervall bzw. mit gleicher Lichtintensität und Lautstärke bzw. Tonfrequenz erzeugt, d. h. beide Signale erscheinen und ertönen gleichzeitig im gleichen Rhythmus bzw. bei einem dunkel leuchtenden Warnsignal ist der Signalton leise und/oder niederfrequent. Leuchtet das Warnsignal hell, ertönt der Signalton laut und/oder hochfrequent. Damit wird die Aufmerksamkeit des Fahrers noch stärker auf die Warnsignale gelenkt.

In einer weiteren Ausführung werden optisches Warnsignal und Signalton mit unterschiedlichen Intervallen bzw. mit unterschiedlicher Lichtintensität, und Lautstärke und Tonfrequenz erzeugt. Dies kann sinnvoll sein, wenn bestimmte Zustände zwischen Hindernis und Fahrzeug angezeigt werden sollen. Dabei können im Verhältnis zwischen Warnsignal und Signalton völlig unterschiedlich auftreten, daß heißt das Warnsignal wird hell oder dunkel, der Signalton laut oder leise, niederfrequent oder hochfrequent, und/oder Warnsignal und Signalton weisen unterschiedliche Intervalle des Auftretens auf. Dann kann die Position des Hindernisses relativ zum Fahrzeug durch bestimmte Kombinationen dieser Signale angezeigt werden.

Die Änderung der Lichtintensität des Warnsignals kann entweder eine helles oder dunkles Leuchten sein oder aber ein Farbänderung des Warnsignals, z. B. von grün über gelb nach rot gehend, wenn das Hindernis nahe ist. Die Änderung der Lichtintensität des Warnsignals kann auch eine Kombination von Helligkeitsänderung und Farbänderung sein.

Bei einigen Blinkanlagen kann es aus technischen Gründen sinnvoll sein, wenn die Warneinrichtung die übliche Anzeige umrandend umgibt oder einfasst. Daher kann die Signalanzeige mit einem mit einem Leuchtmittel zur Wiedergabe des Warnsignals ausgestaltet ist, wobei das Leuchtmittel den Bereich für den normalen Gebrauch zumindest teilweise umgibt.

Die Warneinrichtung kann auch ganz oder teilweise mit einem Spurwechselassistenten zur Überwachung des erweiterten, rückwärtigen Bereiches des Kraftfahrzeuges genutzt werden. Dabei kann der Spurwechselassistent teilweise oder ganz mit dem Sensorsystem verbunden sein, welches dann den erweiterten, rückwärtigen Bereich hinter dem Fahrzeug erfaßt.

Weiter Vorteile und Einzelheiten der Erfindung ergeben sich aus der nachfolgenden Beschreibung von Ausführungsbeispielen anhand der Zeichnung, in der
- Fig. 1: eine schematische Übersicht zur Verdeutlichung des Totwinkelbereichs
- zeigt; Fig. 2: eine schematische Ansicht einer Ausführungsform der Erfindung zeigt;
- Fig. 3: eine schematische Ansicht einer weiteren Ausführungsform der Erfindung zeigt und
- Fig. 4: eine schematische Ansicht einer weiteren Ausführungsform der Erfindung.

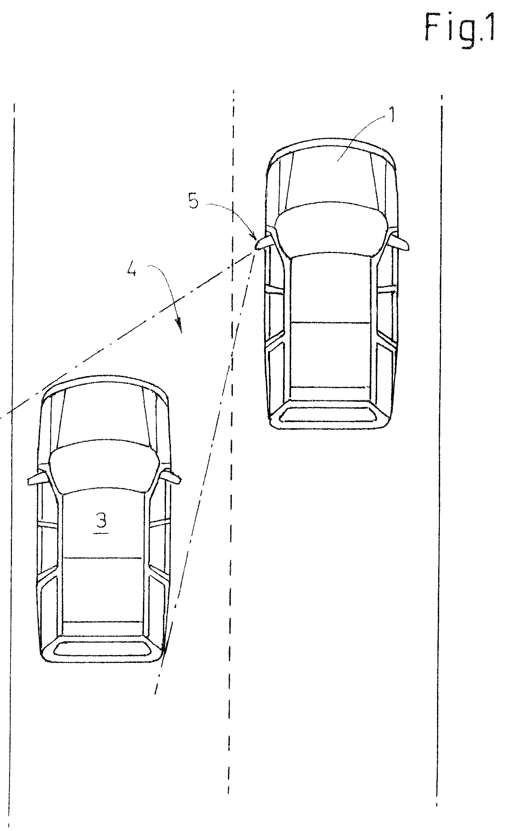

Figur 1 illustriert beispielhaft ein Fahrzeug 1, das mit einer Warneinrichtung 2 versehen ist, die den Fahrer des Fahrzeugs informiert bzw. warnt, wenn ein zweites Fahrzeug 3 in den Totwinkelbereich 4 eintritt.

Der Totwinkelbereich 4 ist der Bereich, in den der Seitenspiegel 5 ohne Bewegung des Fahrers keinen Einblick gewährt. Der Totwinkelbereich 4 kann vielfältiger Gestalt und Größe sein, je nach Fahrzeug, Spiegelkonfiguration etc.

In den weiteren Figuren sind unterschiedlich Ausführungsformen der Warneinrichtung 2 dargestellt, die sich jedoch im Wesentlichen kaum unterscheiden. Daher werden diese nachfolgend gemeinsam anhand identischer Bezugszeichen besprochen werden, wobei auf die Unterschiede eingegangen wird.

Das mit der Warneinrichtung 2 versehene Fahrzeug 1 umfasst jeweils eine Blinkanlage 6 zur Anzeige eines Spurwechsels, die eine im Blickfeld des Fahrers angeordnete Signalanzeige 7 aufweist.

Vorliegend ist diese Signalanzeige 6 in prominenter Stellung im zentralen Instrumentenfeld 8 des Armaturenbretts des Fahrzeugs zwischen dem Tachometer 9 und dem Drehzahlmesser 10 sowie oberhalb eines weiteren Anzeigefeldes 11 angeordnet.

Die Warneinrichtung 2 umfasst weiter ein nicht dargestelltes Sensorsystem zur Erfassung von Hindernissen bzw. anderen Fahrzeugen im Totwinkelbereich 4. Das Sensorsystem kann jegliche Art von Sensoren verwenden, die geeignet sind in zuverlässiger Weise die Annäherung bzw. den Eintritt eines Fahrzeugs in den Totwinkelbereich 4 zu detektieren. Hierbei kann es sich z. B. um Ultraschallsensoren, Kameras oder auch Laser oder Infrarotsensoren usw. handeln.

Das Sensorsystem ist mit einer Steuerung versehen, die bei Erfassung des Hindernisses 3 die Signalanzeige 7 der Blinkanlage 6 ansteuert, um das Warnsignal in optischer Form über die Signalanzeige 6 wiederzugeben.

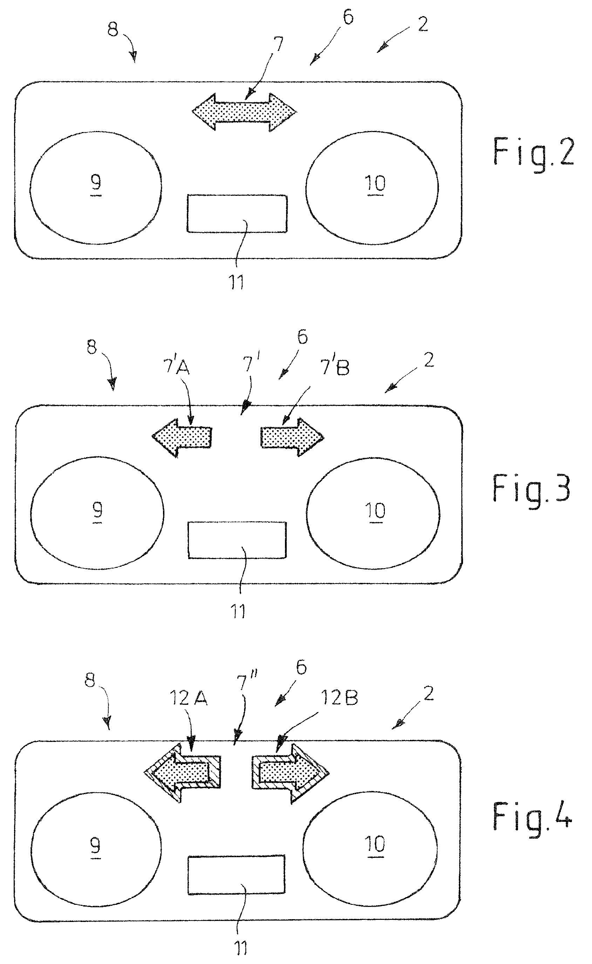

In der in Figur 2 dargestellten Variante weist die Anzeige 7 lediglich einen einzigen Bereich auf, so dass dieser Bereich angesteuert wird, um andersfarbig zu leuchten. Hierzu weist er ein Leuchtmittel auf, das eine zweifarbige LED umfasst.

In der in Figur 3 dargestellten Variante weist die Anzeige 7' dagegen bereits zwei getrennte Bereiche 7'A, B für die getrennte Anzeige eines linken und rechten Spurwechsels auf. Daher werden diese genutzt, um dem Fahrer zusätzlich Informationen über die Richtung zugeben, in der der Totwinkelbereich 4 liegt, in dem das Fahrzeug 3 entdeckt wurde.

Im in Figur 1 gezeigten Beispiel würde also der linke Bereich 7'A der Anzeige 7' der Blinkanlage 6 der in Figur 3 gezeigten Variante angesteuert werden.

Die Signalanzeige 7' der in Figur 3 gezeigten Variante weist ferner die Besonderheit auf, dass die Steuerung ein Blinken der Anzeige bewirkt und zusätzlich ein Warnton in Form eines "Gong" ausgegeben wird.

In der in Figur 4 dargestellten Variante weist die Anzeige 7" wie eben besprochen ebenfalls zwei getrennte Bereiche 7"A, B für die getrennte Anzeige eines linken und rechten Spurwechsels auf. Allerdings sind diese Bereiche 7"A, B jeweils mit einem zusätzlichen optischen Anzeigenbereich 12A, B umrandet, der getrennt von den Bereichen 7"A, B für die Spurwechselanzeige ansteuerbar ist.

Somit erfolgt die Ansteuerung analog zum Beispiel aus Figur 3 mit dem Unterschied, dass die Warnung des Fahrers über die Anzeigenbereich 12A, B erfolgt. In dieser Ausführungsform ist es zudem möglich die Anzeigenbereiche 7"A, B und 12A, B zur Erhöhung des Effekts abwechselnd zum Leuchten anzusteuern.

### Bezugszeichenliste

- 1: Fahrzeug
- 2: Warneinrichtung
- 3: zweites Fahrzeug
- 4: Totwinkelbereich
- 5: Seitenspiegel
- 6: Blinkanlage
- 7, 7', 7": Signalanzeige
- 7'A, B, 7"A,: B Anzeigenbereich
- 8: Instrumentenfeld
- 9: Tachometer
- 10: Drehzahlmesser
- 11: Anzeigefeldes
- 12A, B: Anzeigenbereich

## Patentansprüche

1. Warneinrichtung (2) für ein Kraftfahrzeug (1) mit einer Blinkanlage (6) zur Anzeige eines Spurwechsels umfassend mindestens eine im Blickfeld des Fahrers angeordnete Signalanzeige (7) und mit einem Sensorsystem zur Erfassung von Hindernissen im Totwinkelbereich (4), wobei das Sensorsystem bei Erfassung eines Hindernisses ein Warnsignal erzeugt, **dadurch gekennzeichnet, dass** die Signalanzeige (7) der Blinkanlage (6) mit dem Sensorsystem derart verbunden ist, dass das Warnsignal in optischer Form über die Signalanzeige (7) wiedergegeben wird.

2. Warneinrichtung nach Anspruch 1, **dadurch gekennzeichnet, dass** die Signalanzeige der Blinkanlage (6) getrennte Bereiche (7'A, B; 7"A, B) für die getrennte Anzeige eines linken und rechten Spurwechsels aufweist.

3. Warneinrichtung nach Anspruch 2, **dadurch gekennzeichnet, dass** die getrennten Bereiche (7'A, B; 7"A, B) der Signalanzeige (7'; 7") der Blinkanlage mit dem Sensorsystem derart verbunden sind, dass der Bereich angesteuert wird, der der Richtung des erfassten Hindernisses entspricht.

4. Warneinrichtung nach einem der vorhergehenden Ansprüche, **dadurch gekennzeichnet, dass** die Signalanzeige (7") mit einem Leuchtmittel zur Wiedergabe des Warnsignals in einer von dem normalen Gebrauch abweichenden Farbe ausgestaltet ist.

5. Warneinrichtung nach einem der vorhergehenden Ansprüche, **dadurch gekennzeichnet, dass** die Signalanzeige (7, 7', 7") derart ansteuerbar ausgestaltet ist, dass das optische Warnsignal in Intervallen wiedergegeben wird.

6. Warneinrichtung nach einem der vorhergehenden Ansprüche, **dadurch gekennzeichnet, dass** die Signalanzeige (7, 7', 7") derart ansteuerbar ausgestaltet ist, dass das optische Warnsignal in verschiedener Intervallfolge wiedergegeben wird, abhängig von der Position und/oder Entfernung des Hindernisses.

7. Warneinrichtung nach einem der vorhergehenden Ansprüche, **dadurch gekennzeichnet, dass** die Signalanzeige (7, 7', 7") derart ansteuerbar ausgestaltet ist, dass das optische Warnsignal in verschiedener Lichtintensität wiedergegeben wird, abhängig von der Position und/oder Entfernung des Hindernisses.

8. Warneinrichtung nach einem der vorhergehenden Ansprüche, **dadurch gekennzeichnet, dass** die Warneinrichtung eine Tonerzeugseinrichtung umfaßt, die zusätzlich zum optischen Warnsignal einen Signalton erzeugt.

9. Warneinrichtung nach Anspruch 8, **dadurch gekennzeichnet, dass** optisches Warnsignal und Signalton im gleichen Intervall bzw. mit gleicher Lichtintensität und Lautstärke bzw. Tonhöhe erzeugt werden.

10. Warneinrichtung nach Anspruch 8, **dadurch gekennzeichnet, dass** optisches Warnsignal und Signalton mit unterschiedlichen Intervallen bzw. mit unterschiedlicher Lichtintensität und Lautstärke bzw. Tonhöhe erzeugt werden.

11. Warneinrichtung nach einem der vorhergehenden Ansprüche, **dadurch gekennzeichnet, dass** die Signalanzeige mit einem Mittel zur akustischen Unterstützung der optischen Wiedergabe ausgestaltet ist.

12. Warneinrichtung nach einem der vorhergehenden Ansprüche, **dadurch gekennzeichnet, dass** die Signalanzeige mit einem Leuchtmittel zur Wiedergabe des Warnsignals in einer von dem normalen Gebrauch abweichenden Helligkeit ausgestaltet ist.

13. Warneinrichtung nach einem der vorhergehenden Ansprüche, **dadurch gekennzeichnet, dass** die Signalanzeige (7") mit einem Leuchtmittel (7"A, B) zur Wiedergabe des Warnsignals ausgestaltet ist, wobei das Leuchtmittel den Bereich für den normalen Gebrauch zumindest teilweise umgibt.

14. Verwendung einer Warneinrichtung nach einem der vorhergehenden Ansprüche in Verbindung mit einem Spurwechselassistenten zur Überwachung des erweiterten, rückwärtigen Bereiches des Kraftfahrzeuges.

## Claims

1. Warning apparatus (2) for a motor vehicle (1) having an indicator system (6) for indicating a change of lane comprising at least one signal display (7) arranged in the field of view of the driver and having a sensor system for detecting obstacles in the blind spot (4), wherein the sensor system generates a warning signal in the event of detection of an obstacle, **characterized in that** the signal display (7) of the indicator system (6) is connected to the sensor system such that the warning signal is reproduced in visual form via the signal display (7).

2. Warning apparatus according to Claim 1, **characterized in that** the signal display of the indicator system (6) has separate areas (7'A, B; 7"A, B) for the separate display of a left and right lane change.

3. Warning apparatus according to Claim 2, **characterized in that** the separate areas (7'A, B; 7''A, B) of the signal display (7'; 7'') of the indicator system can be connected to the sensor system in such a manner that the area which corresponds to the direction of the detected obstacle is actuated.

4. Warning apparatus according to one of the preceding claims, **characterized in that** the signal display (7") is configured with an illumination means for reproducing the warning signal in a color which differs from normal practice.

5. Warning apparatus according to one of the preceding claims, **characterized in that** the signal display (7, 7', 7") is configured in an actuable manner such that the visual warning signal is reproduced in intervals.

6. Warning apparatus according to one of the preceding claims, **characterized in that** the signal display (7, 7', 7'') is configured in an actuable manner such that the visual warning signal is reproduced in different interval sequences, as a function of the position of and/or the distance to the obstacle.

7. Warning apparatus according to one of the preceding claims, **characterized in that** the signal display (7, 7', 7") is configured in an actuable manner such that the visual warning signal is reproduced in different light intensities, as a function of the position of and/or the distance to the obstacle.

8. Warning apparatus according to one of the preceding claims, **characterized in that** the warning apparatus encompasses a sound generation apparatus which generates an audible signal in addition to the visual warning signal.

9. Warning apparatus according to Claim 8, **characterized in that** the visual warning signal and audible signal are generated in the same interval or with the same light intensity and volume or audio frequency.

10. Warning apparatus according to Claim 8, **characterized in that** the visual warning signal and audible signal are generated with different intervals or with a different light intensity and volume or pitch.

11. Warning apparatus according to one of the preceding claims, **characterized in that** the signal display is configured with a means for acoustic support of the visual reproduction.

12. Warning apparatus according to one of the preceding claims, **characterized in that** the signal display is configured with an illumination means for reproducing the warning signal in a brightness which differs from normal practice.

13. Warning apparatus according to one of the preceding claims, **characterized in that** the signal display (7'') is configured with an illumination means (7''A, B) for reproducing the warning signal, the illumination means at least partially surrounding the area for normal use.

14. Use of a warning apparatus according to one of the preceding claims in combination with a lane change assistant for monitoring the extended, rear area of the motor vehicle.

## Revendications

1. Dispositif d'alerte (2) pour un véhicule automobile (1) équipé d'un équipement clignotant (6) servant à indiquer un changement de voie comprenant au moins un indicateur de signalisation (7) disposé dans le champ de vision du conducteur et équipé d'un système de détection servant à la détection d'obstacles dans la zone de l'angle mort (4), le système de détection générant un signal d'alerte lors de la détection d'un obstacle, **caractérisé en ce que** l'indicateur de signalisation (7) de l'équipement clignotant (6) est relié au système de détection de telle sorte que le signal d'alerte est reproduit sous forme visuelle par le biais de l'indicateur de signalisation (7).

2. Dispositif d'alerte selon la revendication 1, **caractérisé en ce que** l'indicateur de signalisation de l'équipement clignotant (6) possède des zones séparées (7"A, B ; 7"A, B) pour l'indication séparée d'un changement de voie vers la gauche et vers la droite.

3. Dispositif d'alerte selon la revendication 2, **caractérisé en ce que** les zones séparées (7'A, B ; 7"A, B) de l'indicateur de signalisation (7'; 7") de l'équipement clignotant sont reliées au système de détection de telle sorte que la zone commandée est celle correspondant à la direction de l'obstacle détecté.

4. Dispositif d'alerte selon l'une des revendications précédentes, **caractérisé en ce que** l'indicateur de signalisation (7'') est équipé d'un moyen lumineux destiné à reproduire le signal d'alerte dans une couleur différente de celle de l'utilisation normale.

5. Dispositif d'alerte selon l'une des revendications précédentes, **caractérisé en ce que** l'indicateur de signalisation (7, 7', 7") est configuré pour pouvoir être commandé de telle sorte que le signal d'alerte visuel est reproduit dans des intervalles.

6. Dispositif d'alerte selon l'une des revendications précédentes, **caractérisé en ce que** l'indicateur de signalisation (7, 7', 7") est configuré pour pouvoir être commandé de telle sorte que le signal d'alerte visuel est reproduit dans une suite d'intervalles différente en fonction de la position et/ou de la distance de l'obstacle.

7. Dispositif d'alerte selon l'une des revendications précédentes, **caractérisé en ce que** l'indicateur de signalisation (7, 7', 7") est configuré pour pouvoir être commandé de telle sorte que le signal d'alerte visuel est reproduit dans une intensité lumineuse différente en fonction de la position et/ou de la distance de l'obstacle.

8. Dispositif d'alerte selon l'une des revendications précédentes, **caractérisé en ce que** le dispositif d'alerte comprend un dispositif générateur de tonalité qui génère un signal sonore en complément du signal d'alerte visuel.

9. Dispositif d'alerte selon la revendication 8, **caractérisé en ce que** le signal d'alerte visuel et le signal sonore sont générés dans le même intervalle ou avec la même intensité lumineuse et le même volume sonore ou niveau de tonalité.

10. Dispositif d'alerte selon la revendication 8, **caractérisé en ce que** le signal d'alerte visuel et le signal sonore sont générés avec des intervalles différents ou avec une intensité lumineuse et un volume sonore ou un niveau de tonalité différents.

11. Dispositif d'alerte selon l'une des revendications précédentes, **caractérisé en ce que** l'indicateur de signalisation est équipé d'un moyen d'assistance sonore de la reproduction visuelle.

12. Dispositif d'alerte selon l'une des revendications précédentes, **caractérisé en ce que** l'indicateur de signalisation est équipé d'un moyen lumineux destiné à reproduire le signal d'alerte dans une luminosité différente de celle de l'utilisation normale.

13. Dispositif d'alerte selon l'une des revendications précédentes, **caractérisé en ce que** l'indicateur de signalisation (7'') est équipé d'un moyen lumineux (7"A, B) destiné à reproduire le signal d'alerte, le moyen lumineux entourant au moins partiellement la zone pour l'utilisation normale.

14. Utilisation d'un dispositif d'alerte selon l'une des revendications précédentes en association avec un assistant de changement de voie pour surveiller la zone arrière étendue du véhicule automobile.
